# EUROPEAN PATENT APPLICATION

(11) **EP 2 594 753 A1**
(43) Date of publication of application: **22.05.2013**
(21) Application number: 11189939.9
(22) Date of filing: 21.11.2011
(51) Int. Cl.: F01K 3/00

(54) **Thermal energy storage and recovery system comprising a storage arrangement and a charging/discharging arrangement being connected via a heat exchanger**

(71) Applicant: Siemens Aktiengesellschaft, 80333 München (DE)
(72) Inventor: Barmeier, Till, 7400 Herning (DK); Courtet, Gildas Jean, 7400 Herning (DK); Cronin, Aidan, 7500 Holstebro (DK); Laurberg, Hans, 8000 Århus C (DK); Petersen, Jesper Elliot, 6870 Olgod (DK); Stiesdal, Henrik, 5000 Odense C (DK)

(57) **Abstract**

It is described a thermal energy storage and recovery system (100, 200) comprising (a) a storage arrangement (110, 210) having a thermal energy storage device (120, 320, 520, 620) for temporarily storing thermal energy, (b) a charging/discharging arrangement (160, 260) having a fluid energy machine (162, 266) for exchanging mechanical work with a working fluid cycling through the charging/discharging arrangement (160, 260), and (c) a heat exchanger (180, 280) which is arranged between the storage arrangement (110, 210) and the charging/discharging arrangement (160, 260) and which thermodynamically couples (a) a heat transfer fluid cycling through the storage arrangement (110, 210) with (b) the working fluid. The storage arrangement (110, 210) is configured in such a manner that the heat transfer fluid is under a first pressure and the charging/discharging arrangement (160, 260) is configured in such a manner that the working fluid is at least partially under a second pressure, wherein the second pressure is higher than the first pressure.

## Description

Thermal energy storage and recovery system comprising a storage arrangement and a charging/discharging arrangement being connected via a heat exchanger

### Field of invention

The present invention relates to the field of temporarily storing and recovering thermal energy. In particular, the present invention relates to a thermal energy storage and recovery system comprising a storage arrangement having a thermal energy storage device for temporarily storing thermal energy and a charging/discharging arrangement for (a) charging, in a first operational mode, the thermal energy storage device and for (b) discharging, in a second operational mode, the thermal energy storage device.

### Art Background

The production of electric power from various types of alternative energy sources such as for instance wind turbines, solar power plants and wave energy plants is not continuous. The production may be dependent on environmental parameters such as for instance wind speed (for wind turbines), sunshine intensity (for solar power plant) and wave height and wave direction (for wave energy plants). There is very often little or no correlation between the energy production and the energy demand.

One known approach to solve the problem of uncorrelated electric power production and electric power demand is to temporally store energy, which has been produced but which has not been demanded, and to release the stored energy at times at which there is a high demand. In the past there have been suggested many different methods to temporarily store energy. Suggested methods are for instance (a) mechanical energy storage methods e.g. pumped hydro storage, compressed air storage and flywheels, (b) chemical energy storage methods e.g. electrochemical batteries and organic molecular storage, (c) magnetic energy storage, and (d) thermal energy storage e.g. within water or molten salts.

The document US 2010/0301614 A1 discloses an installation for storing and returning electrical energy. The disclosed installation comprises a first enclosure and a second enclosure each containing a gas and porous refractory materials suitable for transferring heat by a contact between said porous refractory materials and a gas flowing through the respective enclosure. Thereby, the porous refractory material represents a heat storage material and the gas represents a heat transfer medium. The disclosed installation further comprises a compressor and an expander for the gas flowing in pipes between each of the ends of an enclosure connected to an end of the other enclosure. By guiding compressed gas through the porous refractory materials an efficient heat transfer between the gas and the refractory materials can be realized.

With respect to the physical structure and the dimension of the enclosure accommodating the porous refractory material it is clear that the necessary wall thickness of the enclosure is associated with the maximum pressure of the gas. Further, since the storage method has the capacity to store very large quantities of energy the installation for storing and returning electrical energy would use an enclosure having very large dimensions. It is therefore economically advantageous to seek to minimize the internal pressure level of the gas acting as heat transfer medium or heat transfer fluid. One simple way of reducing the internal pressure achieving this result would be simply to limit the compression ratio of the gas. However, within the enclosure there will still be a higher pressure than usual ambient pressure. Therefore, the enclosure will still need to be large and pressure tight and need to comply with relevant safety provisions. However, when the size of the enclosure goes up the volume of gas needed to fill out the enclosure volume goes up correspondingly. Thus, a large amount of gas is not effectively used.

There may be a need for improving the efficiency of a temporal storage of thermal energy within a thermal energy storage and recovery device of a thermal energy storage and recovery system.

### Summary of the Invention

This need may be met by the subject matter according to the independent claims. Advantageous embodiments of the present invention are described by the dependent claims.

According to a first aspect of the invention there is provided a thermal energy storage and recovery system comprising (a) a storage arrangement having a thermal energy storage device for temporarily storing thermal energy, (b) a charging/discharging arrangement having a fluid energy machine for exchanging mechanical work with a working fluid cycling through the charging/discharging arrangement, and (c) a heat exchanger which is arranged between the storage arrangement and the charging/discharging arrangement and which thermodynamically couples a heat transfer fluid cycling through the storage arrangement with the working fluid. The storage arrangement is configured in such a manner that the heat transfer fluid is under a first pressure and the charging/discharging arrangement is configured in such a manner that the working fluid is under a second pressure, wherein the second pressure is higher than the first pressure.

The described thermal energy storage and recovery system is based on the idea that when using different pressures for the heat transfer fluid being assigned to the storage arrangement and for the working fluid being assigned to the charging/discharging arrangement with respect to a thermodynamic efficiency a highly efficient temporal heat storage and heat recovery can be realized.

The heat exchanger may be connected to the thermal energy storage device by means of pipes, in particular insulated steel pipes. Alternatively, the heat exchanger can be located inside the thermal energy storage device in such a way that a possible leaking of heat transfer fluid from the heat exchanger stays inside the thermal energy storage device.

In this document the term "charging/discharging arrangement" may denominate any thermodynamic arrangement, which is capable of (a) charging the storage arrangement respectively the thermal energy storage device, (b) discharging the storage arrangement respectively the thermal energy storage device or (c) charging and discharging the storage arrangement respectively the thermal energy storage device.

In this document the term "fluid energy machine" may be used for any thermodynamic arrangement, which is capable of exchanging mechanical work or mechanical energy between the working fluid and the exterior of the charging/discharging arrangement.

A fluid energy machine as defined above either (a) transfers mechanical work or mechanical energy from outside to the working fluid or (b) extracts mechanical work or mechanical energy from the working fluid and delivers this extracted mechanical work or energy to the outside (e.g. a rotating shaft of an electric generator).

It is mentioned that the working fluid may carry different types of energy. In particular, the working fluid may carry a mixture between thermal energy and mechanic energy, wherein the latter is stored in a compressible fluid when the fluid is under pressure. Further, also a kinetic energy may be associated with the working fluid when the working fluid flows with a certain velocity through corresponding guide channels.

Preferably, the first pressure of the heat transfer fluid is at least approximately constant within the whole storage arrangement. This does not mean that there are not allowed any minor pressure variations which can be caused e.g. by fluid mechanic effects and/or by any means which are responsible for cycling the heat transfer fluid through the storage arrangement. Specifically, of course a pressure drop is needed for establishing a flow of the heat transfer fluid through the storage arrangement. For instance the pressure may be 1.4 bar at an inlet of the storage arrangement and 1 bar at an outlet of the storage arrangement in order to guarantee a necessary flow through for instance a storage arrangement being filled with a rock material. In this respect "approximately constant within the whole storage arrangement" means that within the storage arrangement there is provided no compressor or expander which intentionally changes the pressure within a thermodynamic process.

According to an embodiment of the invention the first pressure is an ambient pressure of the thermal energy storage and recovery system. This may provide the advantage that there is no need for using a pressurized storage vessel for realizing the thermal energy storage device. As a consequence, the thermal energy storage device can be realized by means of an easy construction, wherein no sealing means are required in order to ensure an efficient operation of the whole thermal energy storage and recovery system.

In this respect it is mentioned that for the operation of the storage arrangement at ambient pressure the provision of the heat exchanger may be essential, which allows for a thermodynamic coupling but fur a spatial separation between the heat transfer fluid and the working fluid. This way, it is possible to operate the storage arrangement and in particular the thermal energy storage device at ambient pressure, and it is hereby possible to built large high temperature thermal energy storage device for several hundred of MWh or even GWh at a much lower cost than known solutions.

According to a further embodiment of the invention the storage arrangement comprises means for driving a flow of heat transfer fluid through the storage arrangement. The described means for driving or for cycling the heat transfer fluid may be e.g. at least one fan which, without causing relevant pressure variations within the storage arrangement, can move the heat transfer fluid through the storage arrangement.

Preferably, the storage arrangement comprises two fans, wherein with respect to a flow direction of the heat transfer fluid within the storage arrangement one fan is located upstream of the thermal energy storage device and another fan is located downstream of the thermal energy storage device. Thereby, a heat transfer flow with only very little pressure variations can be realized.

According to a further embodiment of the invention (a) in a first operational mode, in which the thermal energy storage device receives thermal energy from the heat transfer fluid, the storage arrangement is configured for circulating the heat transfer fluid in a first direction, and (b) in a second operational mode, in which the thermal energy storage device transfers thermal energy to the heat transfer fluid, the storage arrangement is configured for circulating the heat transfer fluid in a second direction being opposite to the first direction. Thereby, a switching between the two fundamental different operational modes of the thermal energy storage and recovery system can be realized simply by switching the direction of the above mentioned means for driving a flow of the heat transfer fluid.

According to a further embodiment of the invention (a) in the first operational mode the charging/discharging arrangement is configured for circulating the working fluid in a further first direction, and (b) in the second operational mode the charging/discharging arrangement is configured for circulating the working fluid in a further second direction being opposite to the first direction. This may provide the advantage that also the charging/discharging arrangement can be easily switched between the two operational modes simply by reversing the flow direction of the working fluid.

According to a further embodiment of the invention the charging/discharging arrangement further comprises a further fluid energy machine, wherein with respect to a flow direction of the working fluid the fluid energy machine is located upstream of the heat exchanger and the further fluid energy machine is located downstream of the heat exchanger. This may provide the advantage that the thermodynamic efficiency of the charging/discharging arrangement can be increased significantly.

According to a further embodiment of the invention the fluid energy machine and the further fluid energy machine are configured such that (a) in the first operational mode the fluid energy machine generates thermal energy for the heat exchanger and the further fluid energy machine receives thermal energy from the heat exchanger, wherein the generated thermal energy is larger than the received thermal energy, and (b) in the second operational mode the fluid energy machine receives thermal energy from the heat exchanger and the further fluid energy machine generates thermal energy for the heat exchanger, wherein the received thermal energy is larger than the generated thermal energy.

Using two separate fluid energy machines being assigned to the charging/discharging arrangement may provide the advantage that a highly efficient temporal heat storage and heat recovery can be realized.

Preferably, (a) in the first operational mode the fluid energy machine is configured to act as a compressor and the further fluid energy machine is configured to act as an expander and/or (b) in the second operational mode the fluid energy machine is configured to act as an expander and the further fluid energy machine is configured to act as a compressor.

The described fluid energy machine when acting as a compressor may be configured for an adiabatic compression of the working fluid in order to efficiently compress the working fluid before it is forwarded to the heat exchanger. During the first operational mode the compression process may be optimized in order to achieve an efficient heating up of the working fluid. Correspondingly, the described further fluid energy machine when acting as an expander may be configured for an adiabatic expansion of the working fluid after having passed the heat exchanger.

According to a further embodiment of the invention the charging/discharging arrangement further comprises a mechanical energy transmission arrangement, which is connected between the fluid energy machine and the further fluid energy machine, wherein the mechanical energy transmission arrangement is configured for directly exchanging mechanical energy between the fluid energy machine and the further fluid energy machine. This may provide the advantage that a highly efficient energy storage and recovery process may be realized because mechanical energy being generated at one of the two fluid energy machines can be directly transferred, i.e. without any (inefficient) energy conversion processes, to the other one of the two fluid energy machines.

Specifically, in the first operational mode after having fed compressed and hot working fluid into the heat exchanger a at least partially cooled down compressed working fluid which is returned from the heat exchanger can be used by the further fluid energy machine. Thereby, the energy and in particular the mechanical energy being left in the returned and cooled down compressed working fluid can be extracted with the further fluid energy machine and can be used to help driving the fluid energy machine acting as a compressor for the working fluid being supposed to be compressed and then being fed to the heat exchanger.

Correspondingly, in the second operational mode the fluid energy machine which may act as a turbine is driven by the working fluid which has been compressed before by the further fluid energy machine and which has been heated up by the heat exchanger. Thereby, not all the mechanic energy being generated by the fluid energy machine acting as a turbine is used for external purposes. Rather a portion of the generated mechanic energy is directly (i.e. without any inefficient energy conversion) transferred to the further fluid energy machine acting as a compressor. This transferred mechanical energy can then be used to help driving the compressor for the working fluid which is supposed to be fed to the heat exchanger in order to be heated up.

The mechanical energy transmission arrangement may be realized e.g. by means of a rotatable shaft, which connects the two fluid energy machines with each other.

According to a further embodiment of the invention in the first operational mode the further fluid energy machine is configured for producing cold when expanding the working fluid, wherein the produced cold is useable for cooling purposes.

The cooling purposes may be for instance the operation of a condenser, a cold storage and/or a district cooling system. Preferably, expanding the working fluid is carried out under at least approximately adiabatic conditions which makes the described production of cold very effective.

According to a further embodiment of the invention the charging/discharging arrangement is configured in such a manner that the working fluid when circulating through the charging/discharging arrangement undergoes a change of its state of aggregation. Thereby, the state of aggregation of the working fluid may change between the liquid and the gaseous state. This may allow to increase the efficiency for a temporal heat storage and heat recovery process being carried out by the described thermal energy storage and recovery system.

According to a further embodiment of the invention the charging/discharging arrangement is configured in such a manner that (a) in the first operational mode the charging/discharging arrangement is configured for acting as a heat pump and (b) in the second operational mode the working fluid within the charging/discharging arrangement undergoes a steam cycle. This may provide the advantage that the thermodynamic efficiency for a temporal heat storage and heat recovery process being carried out by the described thermal energy storage and recovery system can be increased even further.

According to a further embodiment of the invention the thermal energy storage device comprises (a) a container having a first fluid terminal for inserting the heat transfer fluid into the interior of the container and a second fluid terminal for extracting the heat transfer medium from the interior of the container and (b) a heat storage material being accommodated within the container. Thereby, the heat storage material is spatially arranged within the container in such a manner that heat transfer fluid flowing between the first fluid terminal and the second fluid terminal gets into direct physical contact with the accommodated heat storage material. This may provide the advantage that there is no need for special pipes, in particular for steel pipes, which are used for guiding the heat transfer fluid. Further, by ensuring a direct physical contact between the heat transfer fluid and the heat storage material a highly efficient thermal energy transfer between the heat transfer fluid and the heat storage material and vice versa can be realized.

The walls of the container may be provided with an insulation layer comprising an insulation material that is able to withstand temperatures above 550° Celsius. The insulation layer, which may have a thickness of between 0.5 two 2 meters, may be arranged at the inner side and/or at the outer side of the container walls. Preferably, the insulation layer is arranged exclusively at the inner side such that the insulation material is protected by the container walls. The container walls may be made e.g. from concrete.

According to a further embodiment of the invention the heat storage material comprises rock material and/or sand material. This may provide the advantage that a low cost and widely available material can be used for building up the thermal energy storage device. Thereby, local labor and locally available heat storage material can be used such that there is no need to transport a suitable heat storage material over a long distance. This may be in particular advantageous if a thermal energy storage device with a high heat storage capability is built up.

It is mentioned that in many applications rocks may be preferred since rocks are inexpensive and act both as heat transfer surface and as a heat storage medium. This means that no special heat transfer equipment is needed within in the container of the thermal energy storage device. Due to a very large heat transfer area the amount of heat transfer between heat transfer medium, which may be e.g. air, and the rocks can be quite high. Further, the heat conductance between the rocks is relatively low due to the small area of contact between different rocks. As a consequence the heat loss from the thermal energy storage device is relatively low and the temperature gradient can be kept steep within the container of the thermal energy storage device.

However, the described thermal energy storage and recovery system makes it also possible to use sand as heat storage material. Again, it is not necessary to use pipes for guiding the heat transfer medium through the interior of the container. Sand may be spatially supported by profiles which generated channels for guiding the heat transfer medium, which may be again air, through the interior of the container of the thermal energy storage device. The profiles may be metal plates, e.g. made from aluminum, steel or any other stable material, which is capable of withstanding high temperatures and/or spatial and/or temporal temperature changes. The profiles may be profiles known from the building industry.

In this respect it is mentioned that generally a heat storage material having a high heat capacity in the container of the thermal energy storage device is preferred in order to keep the size and the price of the thermal energy storage device at a realistic level. With the described thermal energy storage and recovery system it is possible in an advantageous manner to avoid heat storage material having a high heat capacity like chamotte, magnesia, dolomite, mullite etc. which are typically not available at every location and which are often rather costly.

According to a further embodiment of the invention the heat storage material comprises concrete. A thermal energy storage device based on concrete may be in particular used in places where rocks are not available. Instead of using only sand, which requires an appropriate support structure within the container in order to allow heat transfer medium to flow through the container, sand can be used in a concrete mix in order to have fixed spatial structures where the heat transfer medium such as air can flow around and a direct heat transfer can be obtained.

The concrete may be formed as concrete piles distributed within the container of the thermal energy storage device. The concrete piles can be casted on the site using local raw material as filler. The concrete piles can be positioned at different patterns within the thermal storage depending on the optimum flow patterns, heat transfer and pressure drop. The concrete solution is in particular suitable in areas where rocks are not available.

It is mentioned that also concrete bricks may be used. Thereby, the concrete bricks may be packed in a same manner as the above described solution where rocks or a rock material is used as heat storage material. The concrete bricks may be accommodated in an appropriate bed structure.

According to a further embodiment of the invention the heat transfer fluid and/or the working fluid is a gas, in particular air. Thereby, it is not necessary to use one type of gas both in the charging/discharging arrangement and in the storage arrangement. For instance it is possible to use Argon as the working fluid within the charging/discharging arrangement and another type of gas like air in the storage arrangement.

Further, as has already been mentioned above it is also possible that the working fluid undergoes a change of its state of aggregation. Anyway, the overall amount of gas needed for charging the thermal energy storage device is lower than the amount of gas used in prior art solutions for temporarily storing thermal energy.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawing

Figure 1 shows a thermal energy storage and recovery system with an air-to-air heat exchanger thermodynamically connecting a storage arrangement with a charging/discharging arrangement.
Figure 2 shows a thermal energy storage and recovery system with an air-to-steam heat exchanger thermodynamically connecting a storage arrangement with a charging/discharging arrangement.
Figures 3 and 4 show a thermal energy storage device working with air at ambient pressure.
Figures 5, 6 and 7 show a manifold system for feeding a gaseous heat transfer fluid into a container of a thermal energy storage device and/or for receiving a gaseous heat transfer fluid from a container of a thermal energy storage device.
Figure 8 shows a thermal energy storage device using concrete piles as a heat storage material.
Figures 9, 10 and 11 show a thermal energy storage device using sand being accommodated in metal profiles as a heat storage material.

### Detailed Description

The illustration in the drawing is schematically. It is noted that in different figures, similar or identical elements are provided with the same reference signs or with reference signs, which are different from the corresponding reference signs only within the first digit.

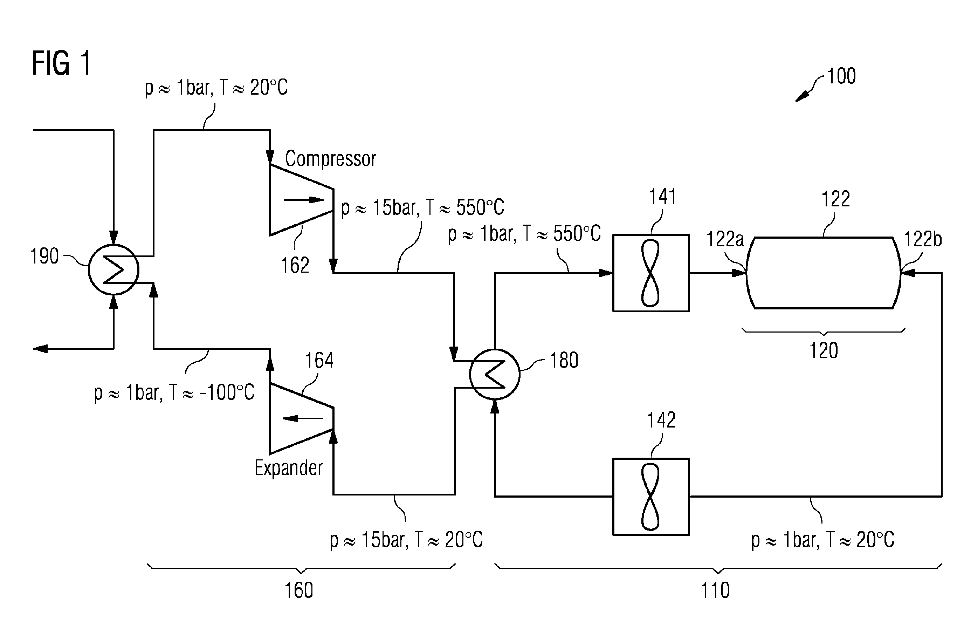

Figure 1 shows a thermal energy storage and recovery system 100 comprising a thermodynamic storage arrangement 110 and a thermodynamic charging/discharging arrangement 160. The thermal energy storage and recovery system 100 further comprises an air-to-air heat exchanger 180 which thermodynamically couples the storage arrangement 110 with the charging/discharging arrangement 160.

According to the embodiment described here the storage arrangement 110 comprises a thermal energy storage device 120 having a container 122 being filled with a non depicted heat storage material and two fluid terminals, a first fluid terminal 122a and a second fluid terminal 122b. One fluid terminal is used for inserting a heat transfer fluid which is circulating through the storage arrangement 110 into the interior of the container 122 and the other fluid terminal is used for extracting the heat transfer medium from the interior of the container 122. The storage arrangement 110 further comprises two means for driving a flow of heat transfer fluid. According to the embodiment described here the first means is a first fan 141 and the second means is a second fan 142.

The charging/discharging arrangement 160 comprises two fluid energy machines, a compressor 162 and an expander 163. Further, the charging/discharging arrangement 160 comprises a further heat exchanger 190 which, as will be described below in more detail, can be used for transferring cold from a working fluid of the charging/discharging arrangement 160 to a not depicted device using the cold. This device may be e.g. a cold storage, a district cooling system and/or a condenser.

The storage arrangement 110, which represents the low pressure side of the thermal energy storage and recovery system 100, is configured in such a manner that the heat transfer fluid circulating through the storage arrangement 110 is always at a low pressure and preferably at a low pressure. According to the embodiment described here the heat transfer fluid is air. The fans 141 and 142 are only used for driving the air flow. They are not used for generating significant pressure differences along the pathway of the air flow. In order to minimize such pressure differences at least two fans 141, 142 are used. Thereby, one fan 141 is arranged upstream of the container 122 and the other fan 142 is arranged downstream of the container 122. Specifically, the fans 141 and 142 can be located at one or more positions for instance in front of the heat exchanger 180, inside the thermal energy storage device 120 and/or between the heat exchanger 180 and the thermal energy storage device 120.

The fans 141, 142 are designed to generate and maintain a certain flow of heat transfer fluid / air through the pipe connections, the heat exchanger 180 and the thermal energy storage device 120. Thereby, a pressure drop within the thermal energy storage device 120 should be taken into account when the designing the storage arrangement 110. In this respect it is mentioned that a pressure drop increases as the length of the thermal energy storage device 120 goes up due to the fact the heat transfer fluid / air has to travel through more storage material. In the end it is an optimization problem between the storage capacity, the length and the width of the thermal energy storage device 120, the pressure drop, and the size of the machinery.

The depicted thermal energy storage and recovery system 100 can be operated in two different operational modes. In a first operational mode which is depicted here both the heat transfer fluid / the air within the storage arrangement and the working fluid within the charging/discharging arrangement circulate in the clockwise direction. In the first operational mode thermal energy is produced by the compressor, which, after having been transferred via the heat exchanger 180 to the storage arrangement 110, is transferred to the thermal energy storage device 120. In this first operational mode some mechanic energy, which is generated within the expander 164 by the working fluid leaving the heat exchanger 180, can be used for supporting the compression of the working fluid within the compressor. The expander 164 and the compressor 162 are preferably mechanical connected on the same shaft (not depicted) in order to efficiently use the mechanic energy being generated by the working fluid expansion for compressing the working fluid within the compressor 162.

In order to change the operational mode of the thermal energy storage and recovery system 100 to a second operational mode, wherein thermal energy, which before has been stored within the thermal energy storage device 120, is extracted from the thermal energy storage device 120, the flow direction both of the heat transfer fluid / air and the working fluid has to be reversed. In the storage arrangement 110 this can be realized simply by driving the fans 141 and 142 in the opposite direction. In the second operational mode heat is transferred from the heat transfer fluid via the heat exchanger 180 to the working fluid. In the charging/discharging arrangement 160 this energy can be used in a known manner by the fluid energy machine 162, which now works as a turbine. Again, in order keep the working fluid circulating a part of the mechanic energy being generated by the turbine 162 can be used for compressing the working fluid within the fluid energy machine 164, which now works like a compressor.

It is mentioned that instead of reversing the direction of one fans also separate fans optimized for either charging or discharging thermal energy can be used. The mass flow in the high pressure side (charging/discharging arrangement) and the low pressure side (storage arrangement) should be the same when the same type of gas is used on both sides. The mass flow needed per MWh when air is used is around 3 kg/s.

The heat exchanger 180, the fans 141 and 142 and the thermal energy storage device are preferably connected to each other by insulated steel pipes. Alternatively, the heat exchanger 180 can be located inside the thermal energy storage device 120 at a hot end in such a way that a leakage from the heat exchanger 180 stays inside the thermal energy storage device 120.

It is an important aspect of the thermal energy storage and recovery system 100 described in this document that the thermal energy storage device 120 works at ambient pressure so there is no need for a pressurized storage vessel. The thermal energy storage device 120 has a number of inlets and outlets located at each end which enables a flow of heat transfer fluid / air through the container 122 of the thermal energy storage device 120. The thermal energy storage device 120 may contain storage material like rocks, sand, concrete or similar cheap and easy available storage material.

In Figure 1 there are depicted appropriate values for the operational parameters pressure p and temperature T within the thermal energy storage and recovery system 100 when being operated in the first operational mode. Since theses values and their thermodynamic relevance are well known for a skilled person, no further details are given in this description.

It is mentioned that the described thermal energy storage and recovery system 100 is aimed for storing tenth and preferably hundreds of MWh in form of thermal energy using rocks, sand or similar material as thermal storage material. As a consequence the volume of heat storage material being accommodated within the container 122 is relatively high and the dimensions of the thermal energy storage device 120 are considerable. The described thermal energy storage and recovery system 100 makes it economical feasible to build a large thermal energy storage devices 120 using known building materials such as concrete, steel and/or local storage material such as rocks or sand. Local contractors can be used for the construction work of the thermal energy storage device 120 since normal materials and principles can be used for the construction.

The described thermal energy storage and recovery system 100 makes it possible to avoid storage of pressurized gas inside the thermal energy storage device 120. The volume of pressurized gas needed in the system 100 is considerably lower than in known solutions where the volume between the walls in the thermal energy storage device 120 and the heat storage material is filled with the gas at high pressure. Large volume of heavy gas types like argon stored in vessels is also a potential safety hazard due to the fact that Argon is heavier than air and force oxygen to rise in case of an unwanted leakage.

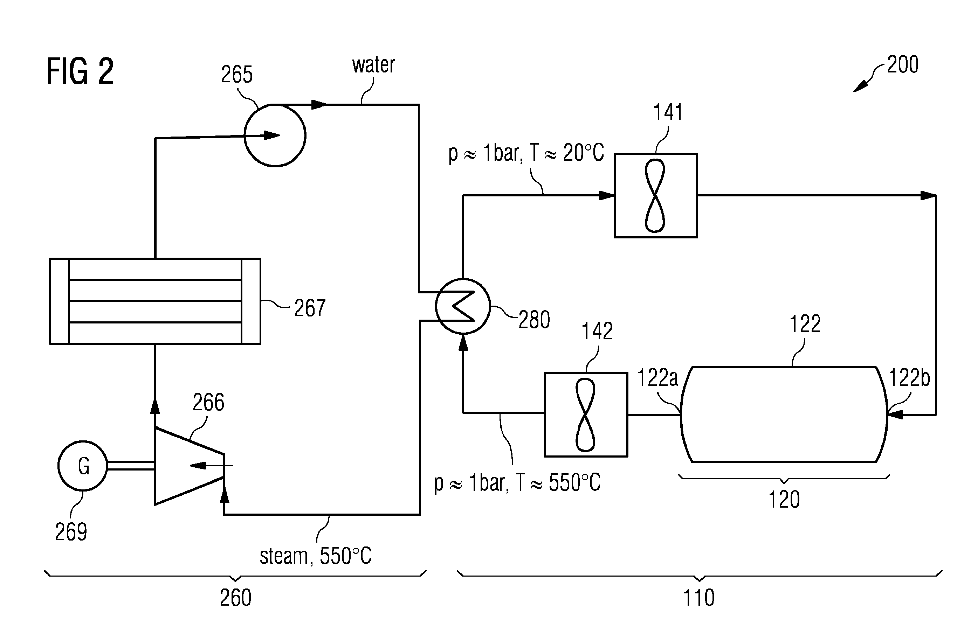

Figure 2 shows a thermal energy storage and recovery system 200 with an air-to-steam heat exchanger 280 thermodynamically connecting a storage arrangement 110 a charging/discharging arrangement 260. Compared to the system 100 shown in Figure 1 the system 200 comprises the same storage arrangement 110 at the low pressure side. In Figure 2 the charging/discharging arrangement 260 is illustrated in the second operational mode, i.e. stored thermal energy is retrieved from the thermal energy storage device 100 and converted to mechanic energy.

As can be seen from Figure 2, the charging/discharging arrangement 260, which represents the steam side of the thermal energy storage and recovery system 200, comprises a pump 265 for feeding liquid working fluid (e.g. water) to the heat exchanger 280. After having received thermal energy from the heat transfer fluid / air of the storage arrangement 110 the working fluid evaporates such that water steam is generated. The thermal energy being included in the water steam is then used in a known manner in a steam turbine 266 in order to generate mechanical energy. According to the embodiment described here this mechanical energy is used at least partially for operating an electric generator 269. The cooled down steam leaving the steam turbine 266 is then condensed in a condenser 267, which is connected to the pump in order to close the water-steam cycle.

It is mentioned that in Figure 1 the heat transfer fluid / the air (a) is inserted into the thermal energy storage device 120 via the first fluid terminal 122a being located at the hot end of the container 122 and is leaving the thermal energy storage device 120 via the second fluid terminal 122b being located at the cold end of the container 122. By contrast thereto, in Figure 2 the heat transfer fluid / the air (a) is inserted into the thermal energy storage device 120 via the second fluid terminal 122b being located at the cold end of the container 122 and is leaving the thermal energy storage device 120 via the first fluid terminal 122a being located at the hot end of the container 122. Therefore, the effective thermodynamic flow direction of the heat transfer fluid / air in the storage arrangement 110 shown in Figure 1 is different from the effective thermodynamic flow direction of the heat transfer fluid / air in the storage arrangement 110 shown in Figure 2.

Descriptive speaking, the stored thermal energy is recovered by a flow of heat transfer fluid / air in the direction shown in Figure 2. Thereby, heat transfer fluid / air at ambient temperature is blown or sucked through the thermal energy storage device 120 whereby transfer fluid / air is heated up by heat transfer from the hot heat storage material. The transfer fluid / air leaves the thermal energy storage device 120 at a temperature corresponding to the temperature level in the hot end of the container 122 preferably around 550°C. The temperature level corresponds to the temperature level used in steam cycles in thermal power plants. Subsequently, the heated up heat transfer fluid / air is let through the heat exchanger 280 in order to generate steam of the working fluid within the charging/discharging arrangement 260. The steam is hereafter fed into the steam turbine 266 that is coupled to the electric generator 269 for the production of electrical power.

It is mentioned that the described "steam discharge solution" can piggy back on existing thermal power plants (nuclear, coal etc.) where existing machinery such as the condenser, steam turbine or boiler can be reused. Furthermore, the cold produced by the expanded air in the charging cycle can be used to lower the temperature in the condenser for improving the overall efficiency of the thermal power plant or for saving water for cooling. Lower temperature in condenser results in larger pressure drops over the steam turbine whereby overall efficiency of the plant is increased.

It is further mentioned that traditional thermal power plants use a huge amount of water for cooling purposes in the condenser. Air cooled condensers are becoming standard in newer plants in order to reduce the massive amount of water used in the water cooled condenser. The cold produced in the expander 164 (shown in Figure 1) can improve the situation both for water cooled and direct air cooled condensers.

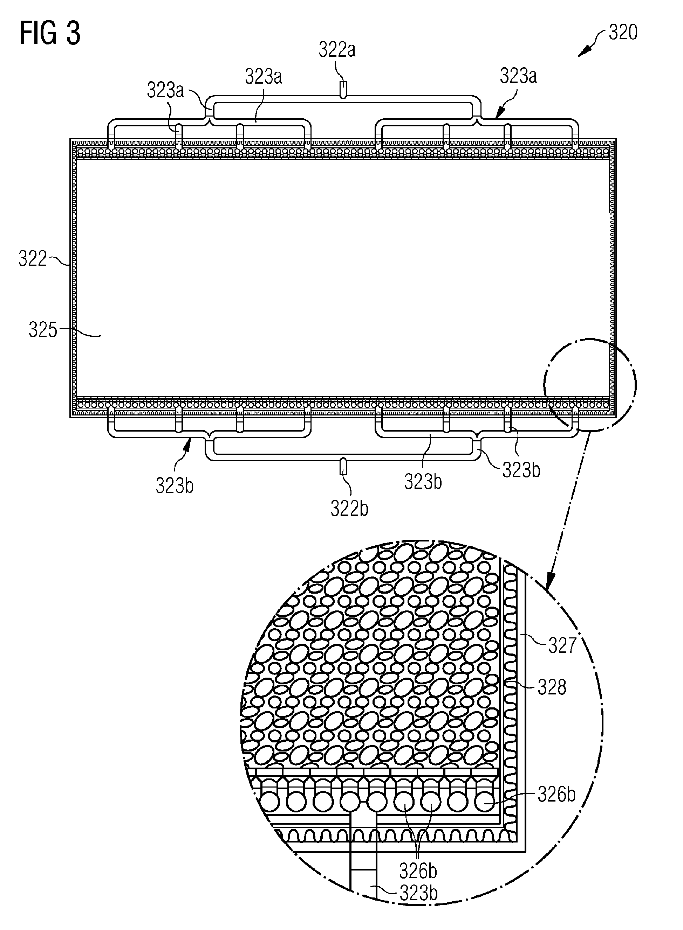

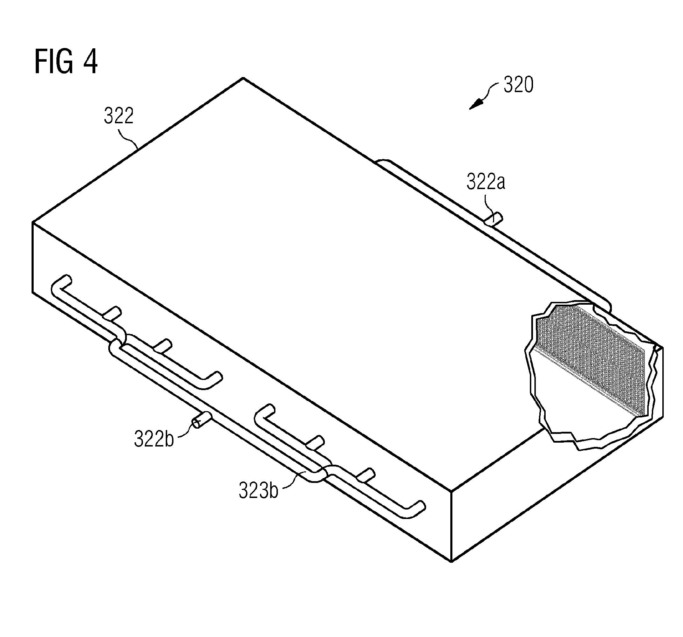

Figures 3 and 4 show a thermal energy storage device 320 working with air at ambient pressure. Within a container 322 of the thermal energy storage device 320 there is provided a cheap and widely available storage material such as sand, rocks or other geological materials available in the respective area. Long and costly transportation of storage material can hereby be avoided.

According to the embodiment described here an outer wall 327 of the container 322 is made of concrete. At the inside the container wall 327 is insulated by a 0.5 to 2 meter thick layer of insulation material 328 that is able to withstand temperatures above 550C.

An internal support structure can be used to keep the heat storage material in place without compressing the porous insulation material. For instance, a metal mesh or inner walls can be used to keep rocks in place.

The floor in the container 322 can be build up by reinforced concrete with porous insulation material below. Alternatively, it is possible to place the heat storage material directly on top of the insulation material.

Insulation material like LECA ® can be used for this purpose. LECA® is burned clay that is burned until all organic material is evaporated and the clay expands and forms small balls which are porous having insulation properties. Rocks and sand can be put directly on top of the insulation without compressing, reducing or crunching the insulation properties.

The storage unit can be located above ground or sunken into the ground.

Also the thermal energy storage device 320 shown in Figures 3 and 4 comprises a first fluid terminal 322a and a second fluid terminal 322b for receiving respectively for emitting heat transfer fluid / air. In order to minimize the flow resistance the first fluid terminal 322a is connected to an outer manifold system 323a with which the flow of heat transfer fluid / air is distributed into different spatially separated channels. Accordingly, also the second fluid terminal 322b is connected to an outer manifold system 323b. Further, the interior of the container 325 representing the heat storage region of the container 322 comprises an inner manifold system 326b for spatially distributing the flow of heat transfer fluid / air into a wide region (when heat transfer fluid / air is inserted into the container via the manifold system 326b) or for spatially merging various spatially distributed flow paths of heat transfer fluid / air into one common flow path (when heat transfer fluid / air is emitted from the container via the manifold system 326b).

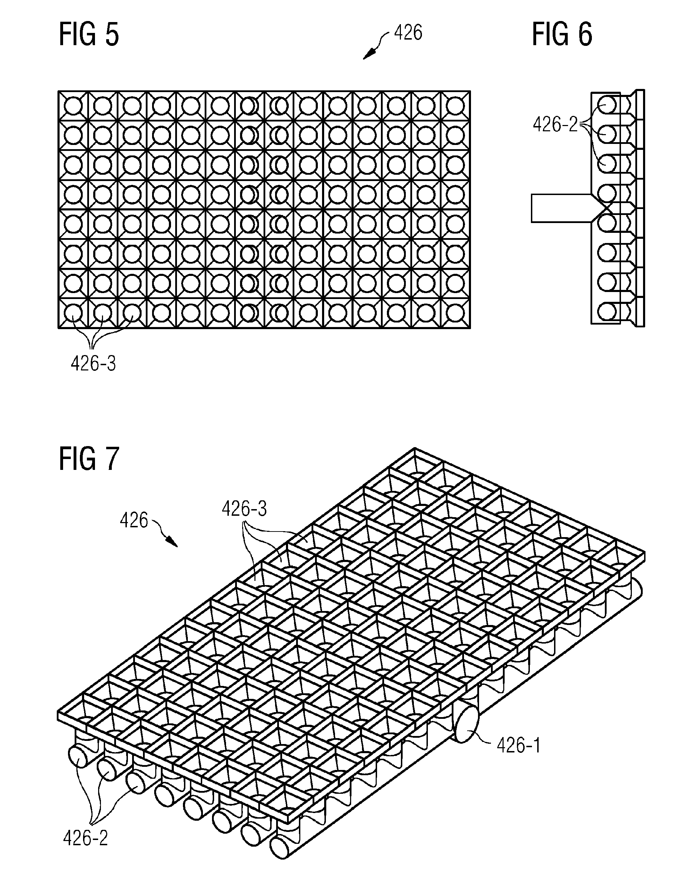

Figures 5, 6 and 7 show a manifold system 426 for feeding a gaseous heat transfer fluid into a container of a thermal energy storage device and/or for receiving a gaseous heat transfer fluid from a container of a thermal energy storage device. The manifold system 426 depicted best in Figure 7 comprises an inlet / outlet pipe 426-1 and a plurality of distribution pipes 426-2. Further, a plurality of funnels 426-3 is associated with each distribution pipe 426-2.

Descriptive speaking, a thermal energy storage device in accordance with an embodiment of the invention comprises inlets / outlets at each end that enable the flow of heat transfer fluid / air through the container 322. Preferably, each end is covered with outlets / inlets in order to utilize the heat storage material at each end. The inlets / outlets may be formed as feed inlets in order to reduce turbulences / pressure drops at the inlets and to catch the heat transfer fluid / air and in order to reduce unwanted pressure drops at the outlets.

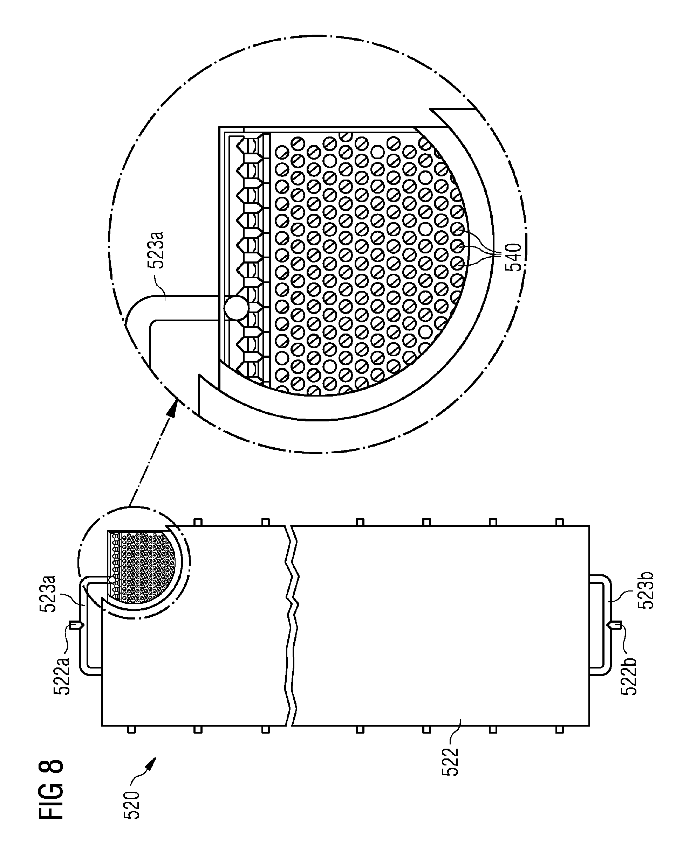

Figure 8 shows a thermal energy storage device 520 using concrete piles 540 as a heat storage material. Also the thermal energy storage device 520 comprises a container 522. At a first end of the container 522 there is provided a first fluid terminal 522a being associated with a first outer manifold system 523a. At a second end of the container 522 there is provided a second fluid terminal 522b being associated with a second outer manifold system 523b.

The concrete piles 540 are arranged in a parallel orientation with respect to each other. In order to allow for a flow of heat transfer fluid / air through the container 522 the concrete piles 540 are spatially distributed such that they are spatially separated from each other. Thereby, the dimensions denominated in the right part of Figure 8 showing an enlarged view of the upper right corner of the container 522 are given in millimeters. It is mentioned that these dimensions are given only as an example and that of course also other dimensions are possible.

Further, the concrete piles 540 can be casted on the site of erection of the thermal energy storage device 520 using local raw material as filler. The concrete piles 540 can be positioned at different patterns within the thermal energy storage device 520 depending on the optimum flow patterns, heat transfer and pressure drop. The concrete piles 540 might be optionally perforated by one or more holes for increasing the heat transfer between the outside and the inside of the concrete piles 540. The described concrete solution is in particular suitable in areas where rocks are not available as heat storage material.

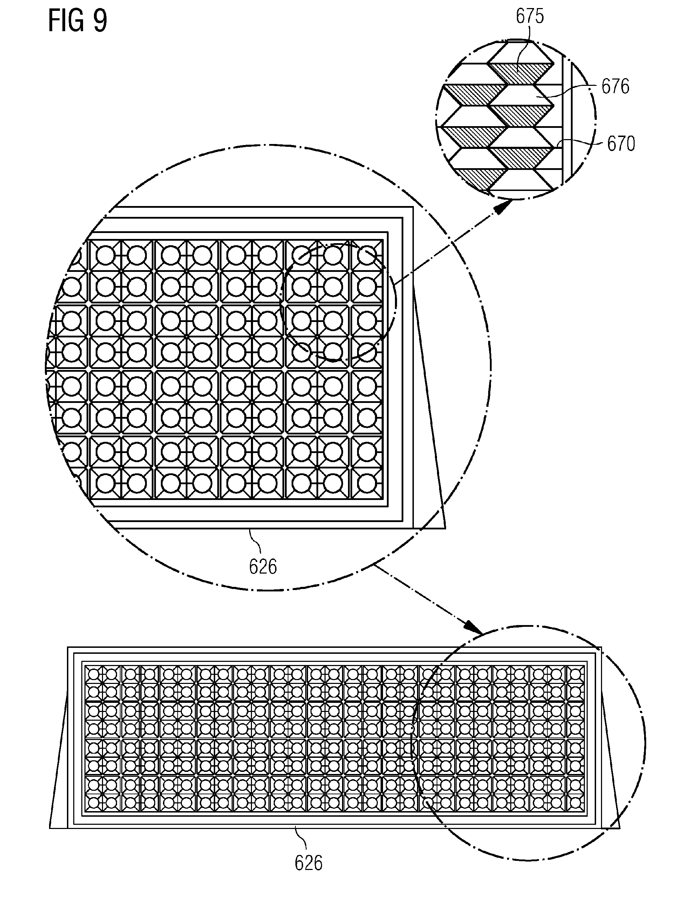

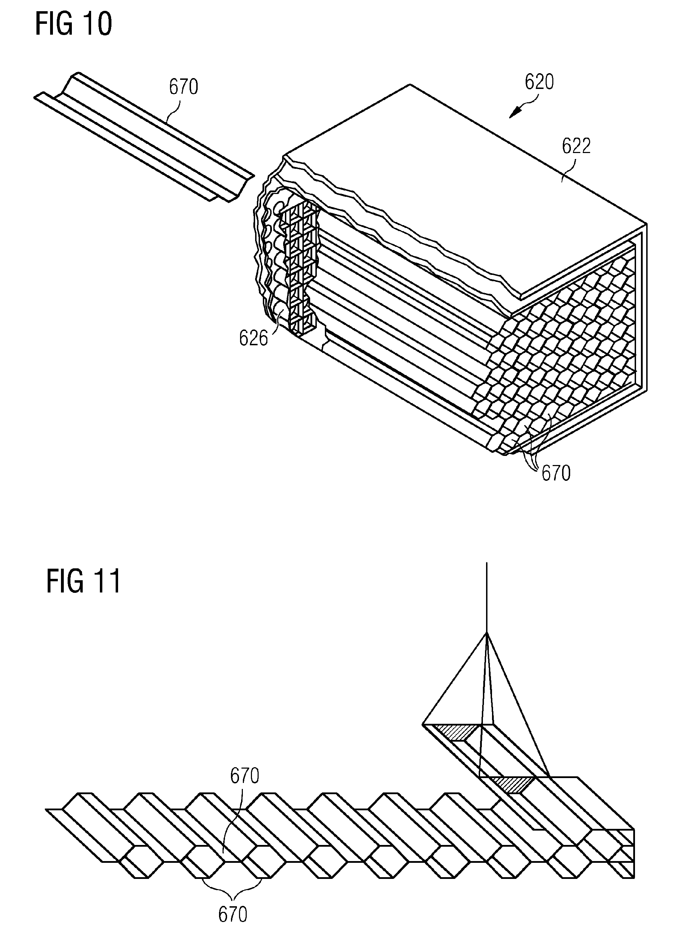

Figures 9, 10 and 11 show a thermal energy storage device 620 using sand as heat storage material. As can be seen from the various illustrations given in these Figures, the thermal energy storage device 620 comprises a container 622. In the upper right illustration in Figure 6 an inner manifold system 626 can be seen.

Within the container 622 there are provided a plurality of support devices 670 each carrying a certain amount of sand 675. According to the embodiment described here the support devices are lengthy metal profiles 670 each being bended along the longitudinal direction of the profiles 670. The sand 675 in located in a lower channel formed by the profiles 670. Above the lower channel there is a free space 676 which represents an upper channel which during operation of the thermal energy storage device 620 is used for a flow of heat transfer fluid.

The thermal energy storage and recovery system described in this document makes it possible to decouple the charging and the discharging of a thermal energy storage device by using a heat exchanger between a high pressure side and a low pressure respectively a steam side. It is hereby possible to have different charge and discharge rates for the thermal energy storage device due to the fact that different machinery may be used for the charging and the discharging. For instance it is possible to discharge the thermal energy storage device at a faster rate than it was charged or vice versa.

It is mentioned that also other discharge configurations are possible. For instance it is possible to discharge using compressed air that is heated up by the hot air from the thermal energy storage device using the heat exchanger. The heated up and compressed air may be let through an air turbine in order to produce electrical energy. Further, the outlet air from such an air turbine may be used directly or indirectly by a heat exchanger to cool the surrounding air in one or more rooms, e.g. for air conditioning purposes inside one or more buildings. This also increases the total efficiency of the described thermal energy storage and recovery system.

In the following there is given as an example some technical data for a thermal energy storage plant having a storage capacity of 48 MW for 10 days. As a heat storage material a material having a porosity of 40% may be used. This means that at ambient pressure of around 1 bar the heat storage material comprises 40% Vol. air and 60% Vol. heat storage material. The necessary air mass flow may be 137.76 kg/s (air is the heat transfer fluid). This means that for one MW an air mass flow of 2.87 kg/s is necessary. The size of the stones being used as the porous heat storage stones may be 0.05 m. The size of the whole thermal energy storage device may be 10m height x 425m wide x 30m long. Preferably, the thermal energy storage device is wider than it is long in order to decrease pressure drops. A calculated pressure drop of the air flowing through the thermal energy storage device may be (only) 0.69 mbar.

It should be noted that the term "comprising" does not exclude other elements or steps and the use of articles "a" or "an" does not exclude a plurality. Also elements described in association with different embodiments may be combined. It should also be noted that reference signs in the claims should not be construed as limiting the scope of the claims.

## Claims

1. A thermal energy storage and recovery system comprising
a storage arrangement (110, 210) having a thermal energy storage device (120, 320, 520, 620) for temporarily storing thermal energy,
a charging/discharging arrangement (160, 260) having a fluid energy machine (162, 266) for exchanging mechanical work with a working fluid cycling through the charging/discharging arrangement (160, 260), and
a heat exchanger (180, 280) which is arranged between the storage arrangement (110, 210) and the charging/discharging arrangement (160, 260) and which thermodynamically couples (a) a heat transfer fluid cycling through the storage arrangement (110, 210) with (b) the working fluid,
wherein
the storage arrangement (110, 210) is configured in such a manner that the heat transfer fluid is under a first pressure and
the charging/discharging arrangement (160, 260) is configured in such a manner that the working fluid is under a second pressure, wherein the second pressure is higher than the first pressure.

2. The thermal energy storage and recovery system as set forth in the preceding claim, wherein
the first pressure is an ambient pressure of the thermal energy storage and recovery system (100, 200).

3. The thermal energy storage and recovery system as set forth in any one of the preceding claims, wherein
the storage arrangement (110, 210) comprises means (141, 142) for driving a flow of heat transfer fluid through the storage arrangement (110, 210).

4. The thermal energy storage and recovery system as set forth in any one of the preceding claims, wherein
- in a first operational mode, in which the thermal energy storage device (120, 320, 520, 620) receives thermal energy from the heat transfer fluid, the storage arrangement (110, 210) is configured for circulating the heat transfer fluid in a first direction, and
- in a second operational mode, in which the thermal energy storage device (120, 320, 520, 620) transfers thermal energy to the heat transfer fluid, the storage arrangement (110, 210) is configured for circulating the heat transfer fluid in a second direction being opposite to the first direction.

5. The thermal energy storage and recovery system as set forth in the preceding claim, wherein
- in the first operational mode the charging/discharging arrangement (160, 260) is configured for circulating the working fluid in a further first direction, and
- in the second operational mode the charging/discharging arrangement (160, 260) is configured for circulating the working fluid in a further second direction being opposite to the first direction.

6. The thermal energy storage and recovery system as set forth in any one of the preceding claims 4 to 5, wherein the charging/discharging arrangement (160) further comprises
a further fluid energy machine (164), wherein with respect to a flow direction of the working fluid the fluid energy machine is located upstream of the heat exchanger (180) and the further fluid energy machine is located downstream of the heat exchanger (180).

7. The thermal energy storage and recovery system as set forth in the preceding claim, wherein
the fluid energy machine (162) and the further fluid energy machine (164) are configured such that
(a) in the first operational mode
- the fluid energy machine (162) generates thermal energy for the heat exchanger (180) and
- the further fluid energy machine (164) receives thermal energy from the heat exchanger (180), wherein the generated thermal energy is larger than the received thermal energy,
and
(b) in the second operational mode
- the fluid energy machine (162) receives thermal energy from the heat exchanger (180) and
- the further fluid energy machine (164) generates thermal energy for the heat exchanger (180), wherein the received thermal energy is larger than the generated thermal energy.

8. The thermal energy storage and recovery system as set forth in the preceding claim, wherein the charging/discharging arrangement (160) further comprises
a mechanical energy transmission arrangement, which is connected between the fluid energy machine (162) and the further fluid energy machine (164), wherein the mechanical energy transmission arrangement is configured for directly exchanging mechanical energy between the fluid energy machine (162) and the further fluid energy machine (164).

9. The thermal energy storage and recovery system as set forth in any one of the preceding claims 7 to 8, wherein in the first operational mode the further fluid energy machine (164) is configured for producing cold when expanding the working fluid, wherein the produced cold is useable for cooling purposes.

10. The thermal energy storage and recovery system as set forth in any one of the preceding claims 1 to 5, wherein the charging/discharging arrangement (260) is configured in such a manner that the working fluid when circulating through the charging/discharging arrangement (260) undergoes a change of its state of aggregation.

11. The thermal energy storage and recovery system as set forth in the preceding claim, wherein
the charging/discharging arrangement (260) is configured in such a manner that
- in the first operational mode the charging/discharging arrangement (260) is configured for acting as a heat pump and
- in the second operational mode the working fluid within the charging/discharging arrangement (260) undergoes a steam cycle.

12. The thermal energy storage and recovery system as set forth in any one of the preceding claims, wherein
the thermal energy storage device (120, 320, 520, 620) comprises
a container (122, 322, 522, 622) having a first fluid terminal (122a, 322a, 522a) for inserting the heat transfer fluid into the interior of the container (122, 322, 522, 622) and a second fluid terminal (122b, 322b, 522b) for extracting the heat transfer medium from the interior of the container (122, 322, 522, 622) and
a heat storage material (540, 675) being accommodated within the container (122, 322, 522, 622),
wherein the heat storage material (540, 675) is spatially arranged within the container (122, 322, 522, 622) in such a manner that heat transfer fluid flowing between the first fluid terminal (122a, 322a, 522a) and the second fluid terminal (122b, 322b, 522b) gets into direct physical contact with the accommodated heat storage material (540, 675).

13. The thermal energy storage and recovery system as set forth in the preceding claim 12, wherein
the heat storage material (675) comprises rock material and/or sand material.

14. The thermal energy storage and recovery system as set forth in the preceding claim 12, wherein
the heat storage material (540) comprises concrete.

15. The thermal energy storage and recovery system as set forth in any one of the preceding claims, wherein
the heat transfer fluid and/or the working fluid is a gas, in particular air.
